(19) **Europäisches Patentamt**
**European Patent Office**
**Office européen des brevets**

(11) **EP 1 592 984 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(51) Int Cl.:
***G01S 13/95*** (2006.01)

(21) Anmeldenummer: **04707193.1**

(22) Anmeldetag: **02.02.2004**

(86) Internationale Anmeldenummer:
**PCT/DE2004/000153**

(87) Internationale Veröffentlichungsnummer:
**WO 2004/070418 (19.08.2004 Gazette 2004/34)**

(54) **VORRICHTUNG UND VERFAHREN ZUR BESTIMMUNG VON NIEDERSCHLAGSARTEN IN DER ATMOSPHÄRE**

METHOD FOR DETERMINING TYPES OF PRECIPITATION IN THE ATMOSPHERE

PROCEDE POUR DETERMINER DES TYPES DE PRECIPITATION DANS L'ATMOSPHERE

(84) Benannte Vertragsstaaten:
**AT BE BG CH CY CZ DE DK EE ES FI FR GB GR HU IE IT LI LU MC NL PT RO SE SI SK TR**

(30) Priorität: **07.02.2003 DE 10305139**

(43) Veröffentlichungstag der Anmeldung:
**09.11.2005 Patentblatt 2005/45**

(73) Patentinhaber: **Metek GmbH**
**25337 Elmshorn (DE)**

(72) Erfinder:
• **FISCHER, Bernd**
**22609 Hamburg (DE)**
• **PETERS, Gerhard**
**22547 Hamburg (DE)**

(74) Vertreter: **Pütz-Poulalion, Marc**
**Patentanwaltskanzlei Heinemeyer**
**Balanstrasse 57**
**81541 München (DE)**

(56) Entgegenhaltungen:
US-A- 4 268 828

• METEK: "MRR-2: Micro Rain Radar / Disdrometer" AVAILABLE FROM INTERNET, XP002282259 <URL: http://www.metek.de/produkte_mrr.htm>

• KLUGMANN D, HEINSOHN D, KIRTZEL J: "A low cost 24 GHz FMCW Doppler radar Rain Profiler" CONTRIBUTIONS TO ATMOSPHERICS PHYSICS, Bd. 69, 1996, Seiten 247-253, XP009031261
• LÖFFLER-MANG M ET AL: "On the Performance of a Low-Cost K-Band Doppler Radar for Quantitative Rain Measurements" JOURNAL OF ATMOSPHERIC AND OCEANIC TECHNOLOGY, Bd. 16, März 1999 (1999-03), Seiten 379-378, XP009031111
• PETERS G, FISCHER B, ANDERSSON T: "Rain observations with a vertically looking Micro Rain Radar (MRR)" BOREAL ENVIRONMENT RESEARCH, Bd. 7, 23. Dezember 2002 (2002-12-23), Seiten 353-362, XP001181509 Helsinki
• PRODI F ET AL: "Time variability in rainfall events observed by Pludix" 2ND EUROPEAN CONFERENCE ON RADAR METEOROLOGY, 18. November 2002 (2002-11-18), XP002282260 Delft, NL in der Anmeldung erwähnt
• SHEPPARD B E ET AL: "'A NEW PRECIPITATION OCCURENCE SENSOR SYSTEM'" SYMPOSIUM METEOROLOGICAL OBSERVATIONS AND INSTRUMENTATION, XX, XX, 11. April 1983 (1983-04-11), Seiten 38-41, XP002909147
• SHEPPARD B E ET AL: "AN IMPROVED AES PRECIPITATION OCCURRENCE SENSOR SYSTEM" WMO TECHNICAL CONFERENCE ON INSTRUMENTS AND METHODS OF OBSERVATION, XX, XX, Nr. 22, 8. Juli 1985 (1985-07-08), Seiten 103-108, XP002909145

**Beschreibung**

**Technisches Gebiet**

Die Erfindung bezieht sich auf ein Verfahren zur Ermittlung von Niederschlagsarten in der Atmosphäre, bei dem ein Ausgangssignal, insbesondere Radarsignal, das ein Sendefrequenzspektrum aufweist, ausgesandt, Reflexionssignale detektiert werden, die durch Streuung der Ausgangssignale an in wenigstens zwei Atmosphärenstufen befindlichen Niederschlagsteilchen gebildet werden und die ein Reflexionsspektrum aufweisen, und bei dem schließlich die Eigenschaften der Reflexionssignale ausgewertet werden.

**Stand der Technik**

Die Überwachung der Atmosphäre hinsichtlich Niederschlagserscheinungen ist für den Luft- und Straßenverkehr, die Landwirtschaft und das Wassermanagement von großer Bedeutung. Daher sind eine Vielzahl von Systemen bekannt, mit denen Niederschlagsarten in der Atmosphäre detektiert werden können. Bei den zu detektierenden Niederschlagsarten handelt es sich um alle Formen flüssigen und gefrorenen Niederschlags, wie bspw. Regen, Niesel, Schnee oder Hagel. Weiterhin sind auch in der Atmosphäre schwebende Teilchen von Bedeutung, da auch diese zu Sichthindernissen führen können. Bei derartigen schwebenden Teilchen handelt es sich in der Regel um Sprühregen, Nebel, Dunst, Staub o. ä.. Herkömmliche Instrumente zur Überwachung atmosphärischer Erscheinungen, die am Ort der Messinstrumente auftreten, bedienen sich bei der Überwachung von Niederschlagserscheinungen verschiedener Methoden.

So sind eine Reihe von Geräten zur Messung sowohl der Niederschlagsrate als auch der Stärke oder Intensität des Niederschlags bekannt, mit denen der Niederschlag aufgefangen wird, um Aussagen über die Menge sowie die Intensität der zurückliegenden Niederschläge machen zu können. Eine spezielle Ausführungsform dieser Art von Meßgeräten weist zwei pendelnde Sammelgefäße oder "Kippbecher" auf, mit denen der Niederschlag in flüssigem Zustand gesammelt wird. Zusätzlich ist eine Heizvorrichtung vorgesehen, mit der gefrorener Niederschlag zu Wasser geschmolzen wird, um die Niederschlagsmenge zu ermitteln.

Die vorbeschriebene Meßmethode liefert allerdings keine Meßergebnisse mit hoher Genauigkeit. Zum einen ergibt sich bei leichtem Niederschlag oftmals ein langes Meldeintervall und zum anderen wird bei Auftreten von "wehendem" Niederschlag ein zu geringer Niederschlagswert angezeigt.

Für präzisere Messungen sind daher Geräte bekannt, die sich optischer oder elektrischer Meßmethoden bedienen und mit denen in der Regel sowohl die Niederschlagsmenge, als auch die Fallgeschwindigkeit sowie die Größe der Niederschlagsteilchen gemessen wird. Ein Meßprinzip beruht bspw. auf dem Effekt, dass Teilchen, die durch ein elektrisches Feld fallen, die Kapazität ändern, während andere Meßverfahren die Reflexion von Lichtstrahlen an Niederschlagsteilchen detektieren.

In der DE 35 90 723 C2 wird ein automatisiertes System zur Identifizierung des Typs von Niederschlägen und zur Ermittlung der Niederschlagsstärke bzw. zur Bestimmung der Sichtweite beschrieben. Das dargestellte System verfügt im Wesentlichen sowohl über eine Strahlquelle zur Erzeugung eines Strahlbündels als auch über einen Detektor zum Erfassen der von Schwebe- oder von Niederschlagsteilchen innerhalb eines Probevolumens gestreuten bzw. reflektierten Strahlung. Die Strahlquelle emittiert eine Strahlung mit einer Wellenlänge aus den sichtbaren und fast -sichtbaren Spektralbereichen, bspw. wird hierfür eine Diode, die sichtbares Licht oder eine Infrarotstrahlung emittiert, verwendet. Der Detektor enthält einen Fühler mit einem photoelektrischen Element. Darüber hinaus ist eine Linse bzw. ein Schirm vorgesehen, die derart angeordnet werden, dass der Detektor nur einen diskreten Bereich des Strahls, insbesondere die Strahlung, die in einem mittleren Winkel oder Zentralstreuwinkel von 30° bis 35° gegenüber der Achse des Strahlenbündels nach vorne gestreut wird, erfassen kann. Auf Grund dieser Meßanordnung ist die Größe des Probevolumens auf 200 - 1000 ml beschränkt.

Damit handelt es sich bei diesem Gerät um ein Meßinstrument, mit dem Niederschlagsarten ausschließlich in einem sehr kleinen Ausschnitt der Atmosphäre detektierbar sind. Eine Detektion von Niederschlagsarten in unterschiedlichen Höhen der Atmosphäre ist mit diesem Gerät dagegen nicht möglich. Darüber hinaus ist es bspw. ebenfalls nicht möglich, die Höhe festzustellen, in der sich der Aggregatzustand eines Niederschlags, bspw. von Schnee zu Regen, ändert.

Ferner ist aus "F. Prodi et. al.: "Time Variability in Rainfall Events Observed by Pludix; 2nd European Conference on Radar Meteorology; Delft, NL; 18. - 22. November 2002" ein Gerät bekannt, das elektromagnetische Strahlung zur Bestimmung von Niederschlagsarten nutzt. Zwei Radarsender senden Strahlbündel derart aus, dass sich ein Probenvolumen bildet, das einen Durchmesser von ca. einem Meter aufweist und bis in eine Höhe von 3 m über dem Meßgerät reicht. Über Detektoren wird die Frequenz der an den im Probevolumen befindlichen Niederschlagsteilchen gestreuten Strahlung ermittelt und anschließend die Fallgeschwindigkeit der Niederschlagsteilchen, unter Berücksichtigung der Frequenzverschiebung gegenüber der Sendefrequenz, bestimmt. Das Meßintervall, über das die aufgenommenen Meßwerte integriert werden, beträgt 60 s.

Auch mit dem in dieser Druckschrift beschriebenen Meßgerät ist es allerdings nicht möglich, die in der Atmosphäre auftretenden Niederschlagserscheinungen höhenaufgelöst zu detektieren und somit die in unterschiedlichen Höhenstufen auftretenden Niederschlagsarten anzugeben. Darüber hinaus ändert sich bei Systemen mit gekreuzten Strahlen im Nahbereich der Streuwinkel beim Fallen der Niederschlagsteilchen durch das Streuvolumen. Zu einer Fallgeschwindigkeit gehört somit ein ganzer Bereich von Dopplerverschiebungen, dessen Breite von der Streugeometrie abhängt. Da hier keine eindeutige Beziehung zwischen dem Dopplerverschiebung und der Fallgeschwindigkeit besteht, ist das Dopplerspektrum nicht eindeutig, sondern nur mit einschränkenden Annahmen über die Tropfengrößenverteilung zu interpretieren.

Neben den vorgenannten Meßgeräten sind weiterhin polarimetrische Doppler-Wetterradars bekannt, mit denen eine Klassifizierung von Niederschlagsarten möglich ist, wobei Niederschlagsteilchen in einem Umkreis mit einem Radius von bis zu 300 km detektiert werden können. Ein Beispiel für ein derartiges Gerät ist das Polarimetric-Doppler-Radar, das seit 1986 in Oberpfaffenhofen von der DLR betrieben wird. Nachteilig bei den vorgenannten Wetterradars ist, dass wegen der Erdkrümmung die Höhe, in der sich das unterste erfassbare Messvolumen befindet, quadratisch mit zunehmender Entfernung vom Radar ansteigt, so dass die Charakterisierung des auf den Boden treffenden Niederschlags unsicher wird.

**Darstellung der Erfindung**

Ausgehend von dem bekannten Stand der Technik liegt der Erfindung die Aufgabe zugrunde, ein Verfahren anzugeben, mit dem unter Einsatz eines geringen anlagentechnischen Aufwandes die Bestimmung der in verschiedenen Höhenstufen auftretenden Niederschlagsarten sowie der Niederschlagsintensität möglich ist. Insbesondere sollen entsprechende Messungen mit verlässlichen Ergebnissen bis in eine Höhe von etwa 2000 m durchführbar sein.

Die Lösung der der Erfindung zu Grunde liegenden Aufgabe ist im Anspruch 1 angegeben. Vorteilhafte Weiterbildungen des Erfindungsgedankens sind Gegenstand der Unteransprüche sowie aus dem nachfolgenden Beschreibungstext unter Bezugnahme auf das Ausführungsbeispiel zu entnehmen.

Erfindungsgemäß ist ein Verfahren gemäß des Oberbegriffs des Anspruchs 1, das sich dadurch auszeichnet, dass beim Auswerten von Eigenschaften der Reflexionssignale ein Verlauf eines aus Sendefrequenz- und Reflexionsfrequenzspektrum gebildeten Differenzfrequenzspektums nach Höhenstufen aufgelöst ausgewertet wird.

Mit dem vorbeschriebenen Verfahren ist es somit möglich, auf einfache Weise nach Höhenstufen getrennt Informationen über die in den jeweiligen Höhenstufen vorkommenden Niederschlagserscheinungen zu erhalten. Da das erfindungsgemäße Verfahren mit einer Vielzahl bekannter Meßgeräte, die in der Lage sind, elektromagnetische Strahlung in die Atmosphäre abzustrahlen und Reflexionssignale zu empfangen, realisierbar ist, können von einem nahezu beliebigen Meßort aus Untersuchungen der Atmosphäre durchgeführt werden, ohne dass ein erheblicher Aufwand für die Aufstellung und Justierung der Meßausrüstung erforderlich ist.

Werden die Ausgangssignale in größerer Höhe reflektiert bzw. gestreut, so ändern sich die Stärke des Reflexionssignals sowie die Gesamtlaufzeit, die sich aus der Laufzeit des Ausgangs- und des Reflexionssignals ergibt. Die Bestimmung der Niederschlagsart erfolgt hingegen, wie im Folgenden noch ausführlich beschrieben wird, durch die Auswertung des Verlaufs des Differenzfrequenzspektrums, das auch als Dopplerverschiebung bezeichnet wird. Sollen die charakteristischen Verläufe der Funktionskurven von Niederschlagsarten, die in unterschiedlichen Höhenstufen vorhanden sind, mit einander verglichen werden, so sind diese vorzugsweise auf einen einheitlichen Wert der Empfangsleistung zu normieren.

Die Höhe, in der das Sende- bzw. Ausgangssignal gestreut wird, wird aus der Zeitverschiebung zwischen dem Sende- und Empfangssignal bestimmt. Insbesondere eignet sich hierfür das sogenannte Doppler-FM-CW-Verfahren (FM-CW = Frequency Modulated Continuous Wave). Wesentlich an diesem Verfahren ist, dass mit konstanter Sendeleistung gesendet wird. Da hiermit die verfügbare Senderleistung maximal genutzt wird, ist eine Leistung des Senders von wenigen Milliwatt erforderlich. Die Frequenz des Signals wird sägezahnförmig moduliert, so dass auch ein durch eine Streuung in der Atmosphäre hervorgerufenes Reflexionssignal sägezahnförmig moduliert ist. Die Frequenz des mit einer Sendeeinheit detektierten Reflexionssignals ist jedoch gegenüber der des Sendesignals wegen der Laufzeitverschiebung proportional zur Höhe des Messvolumens verschoben. Aus dieser Differenzfrequenz zwischen Ausgangs- und Reflexionssignal wird die Messhöhe abgeleitet.

Neben der Frequenzverschiebung zwischen Ausgangs- und Reflexionssignal auf Grund der Laufzeitänderung des Signals können in der Atmosphäre weitere Effekte auftreten, die eine zusätzliche Frequenzverschiebung verursachen. So wird das Signal, sobald Niederschlagserscheinungen in der Atmosphäre auftreten, nicht nur in einer Höhe sondern entsprechend der vertikalen Niederschlagsverteilung mehr oder weniger gleichmäßig aus einem größeren Höhenbereich gestreut.

Letztendlich muss aus einem Reflexionssignal, das sich aus einer Vielzahl von in verschiedenen Höhenstufen gestreuten Messsignalen zusammensetzt, sowohl die Information über die jeweilige Höhenstufe, aus der ein Messsignal stammt, als auch über die Fallgeschwindigkeit der sich in der entsprechenden Höhenstufe bewegenden Niederschlagsteilchen ermittelt werden.

Die gleichzeitige Bestimmung der Empfangsleistungen aus mehreren Höhenstufen, die die unterschiedlichen Messhöhen darstellen, erfolgt durch eine Fourieranalyse (FA1) des Differenzfrequenzspektrums innerhalb einer Sägezahnperiode. Auf diese Weise werden eine Vielzahl von Spektrallinien ermittelt, die jeweils unterschiedliche Empfangsleistungen des in unterschiedlichen Höhenstufen gestreuten Ausgangssignals repräsentieren. Die Empfangsleistung ist schließlich ein Maß für die Streuleistung in der der jeweiligen Spektrallinie entsprechenden Höhenstufe.

Wie bereits erwähnt, enthält jede, höhenstufenspezifische Spektrallinie eine zusätzliche Information über die Fallgeschwindigkeit der Niederschlagsteilchen. Mittels einer zweiten Fourieranalyse (FA2) werden die höhenstufenspezifischen Spektrallinien in vorzugsweise 64 unterschiedliche, fallgeschwindigkeitsspezifische Spektrallinien aufgeteilt. Jede dieser Spektrallinien repräsentiert eine Fallgeschwindigkeit. Die fallgeschwindigkeitsspezifischen Spektrallinien 1 bis 64 entsprechen Fallgeschwindigkeiten der Niederschlagsteilchen von 0,19 bis etwa 12 m/s, die es ermöglicht, auf die Tropfengröße in der jeweiligen Höhenstufe zu schliessen. In einer besonderen Ausführungsform des erfindungsgemäßen Verfahrens werden 58 Spektralwerte im Frequenzintervall 3 bis 61 verwendet. Die kleinste auflösbare Fallgeschwindigkeit eines Niederschlagsteilchens beträgt in diesem Fall 0,57 m/s, was einer Tropfengröße von 0,21 mm entspricht.

Die genaue Fallgeschwindigkeit der Niederschlagsteilchen in einer Höhenstufe wird aus der Phasenverschiebung der dieser Messhöhe entsprechenden Spektrallinien in aufeinanderfolgenden Sägezahnperioden des Reflexionssignals bestimmt. Hierbei ist wiederum zu beachten, dass sich nicht alle in einer Höhenstufe befindlichen Niederschlagsteilchen mit derselben Fallgeschwindigkeit bewegen, sondern entsprechend der Größenverteilung der Niederschlagsteilchen eine Fallgeschwindigkeitsverteilung zu beobachten ist. Diese Verteilung und die zu jeder Geschwindigkeit gehörende spektrale Signalleistung in einer Höhenstufe wird dadurch bestimmt, dass für eine größere Zahl aufeinanderfolgender Sägezahnperioden die Folge der dieser Höhenstufe entsprechenden Spektrallinie einer zweiten Spektralanlyse unterzogen wird (FA2). Das Ergebnis der FA2 repräsentiert das Dopplerspektrum des aus der jeweiligen Messhöhe empfangenen Signals.

Die vorbeschriebene Fallbewegung der Niederschlagsteilchen führt auf Grund des Dopplereffekts zu einer weiteren Frequenzverschiebung. In diesem Zusammenhang ist es wichtig die Frequenzverschiebung wegen der Laufzeitänderung des Ausgangssignals gegenüber dem Reflexionssignal bzw. die Frequenzverschiebung, die durch die Fallbewegung der Niederschlagsteilchen in den unterschiedlichen Höhenstufen verursacht wird zu unterscheiden. Findet keine genaue Identifikation der durch die beiden unterschiedlichen Effekte hervorgerufenen Frequenzverschiebung statt, können Mehrdeutigkeiten in der Höhenauflösung entstehen. Daher wird die FA1 vorzugsweise derart dimensioniert, dass die auf Grund der maximal zu erwartenden Fallgeschwindigkeit entsprechende Dopplerverschiebung klein gegen den Linienabstand der FA1 ist.

In einer besonderen Ausführungsform des erfindungsgemäßen Verfahrens werden die Ausgangs- sowie die Reflexionssignale von einer kombinierten Sende- und Empfangseinheit gesendet bzw. empfangen. Sowohl das ausgesandte als auch das reflektierte Strahlbündel legen somit exakt den gleichen Weg allerdings in umgekehrter Richtung zurück. Ein Kreuzen verschiedener Strahlbündel findet somit nicht statt, so dass der Messbereich nicht auf ein bestimmtes Probevolumen beschränkt ist

Der Streuwinkel beträgt im gesamten Streuvolumen einheitlich 180°, und die Strahlbreite wird vorzugsweise auf einen Wert von 1° eingestellt. Auf diese Weise ist eine eindeutige Beziehung zwischen der Dopplerverschiebung und der Fallgeschwindigkeit der Niederschlagsteilchen sicher gestellt.

Um aussagekräftige Ergebnisse für die Niederschlagserscheinungen zu erhalten, wird der Bereich oberhalb des Messgerätes vorzugsweise in 30 Höhenstufen aufgeteilt, von denen die obersten 28 Höhenstufen für die Auswertung der Reflexionssignale herangezogen werden. Die Festlegung der Ausdehnung der einzelnen Höhenstufen wird in Abhängigkeit des jeweils auszuwertenden Atmosphärenbereichs variabel gewählt. In einer besonderen Ausführungsform des erfindungsgemäßen Verfahrens weisen die einzelnen Höhenstufen eine vertikale Ausdehnung von 35 m auf. Auf diese Weise ist die Unterscheidung von Niederschlagsarten in einem Bereich von 70 - 1050 m oberhalb des Messgerätes möglich. Die Auswertung der Reflexionssignale erfolgt bevorzugt in einem zeitlichen Abstand von 10 s.

Eine weitere besondere Ausführungsform des erfindungsgemäßen Verfahrens sieht die Kombination der vorgenannten Merkmale vor, so dass in diesem Fall ein Regenradar, insbesondere ein 24 GHz FM-CW-Radar, für 30 Messhöhen Leistungsspektren mit einer Mittelungszeit von 10 Sekunden liefert. Die Höhenauflösung beträgt 35 m, wobei das erste auswertbare Höhenintervall bei 70 m zentriert ist. Die 10 Sekunden-Intervalle enthalten in diesem Fall jeweils 6 Messungen, die allerdings nicht vollständig erfasst und ausgewertet werden, da auch für die Übertragung der Daten Zeit benötigt wird.

Weiterhin haben Versuche gezeigt, dass für eine zuverlässige Unterscheidung der verschiedenen, in der bodennahen Atmosphäre auftretenden Niederschlagsarten eine Beschränkung auf die Auswertung der aus vier unterschiedlichen Höhenstufen empfangenen Reflexionssignale ausreichend ist. Bevorzugt werden hierbei die Höhenstufen 70 - 105 m, 105 - 140 m, 210 - 245 m sowie 420 - 455 m, für eine Klassifizierung der Niederschlagsarten herangezogen. Von den vier ausgewählten Höhenstufen werden die beiden unteren Höhenstufen, nämlich 70 - 105 m sowie 105 - 140 m, ausgewählt, um ein größeres Gewicht der Aussagen der Spektren über den Niederschlag in Bodennähe zu erhalten, während die oberen beiden Höhenstufen vornehmlich ausgewertet werden, um Informationen über eventuelle Schneeregen-Erscheinungen zu erhalten.

Der Detektion und der anschließenden Bestimmung sowohl flüssiger Niederschlagsteilchen in den beiden ausgewählten unteren Höhenstufen, als auch gefrorener Niederschlagsteilchen in den oberen ausgewählten Höhenstufen liegt das gleiche Messprinzip zu Grunde. Es wird die Frequenzverschiebung gegenüber der Sendefrequenz, die sogenannte Dopplerverschiebung, bestimmt, die die Fallgeschwindigkeit der detektierten Niederschlagsobjekte im Streuvolumen angibt. Für Regentropfen ist die Fallgeschwindigkeit, sofern die Vertikalbewegung der Luft vernachlässigt wird, von der Tropfengröße abhängig. Aus der empfangenen Leistung pro Frequenzintervall wird vorzugsweise die Tropfenkonzentration abgeleitet, da der Rückstreuquerschnitt als Funktion der Tropfengröße nach der Mie-Theorie (bspw.: Born, Wolf; Winkelverteilung der senkrechten und parallelen Komponente der Intensität von an Kugeln gestreutem Licht; 1973) bekannt ist und sich die Streuleistungen der einzelnen Tropfen addieren. Auf diese Weise ist für flüssige Niederschläge die Regenrate bestimmbar.

Damit sind aus den Dopplerspektren für flüssige Niederschläge in allen, jeweils zur Messung herangezogenen Höhenstufen Tropfengrößen, Partikelanzahl, Regenraten und Flüssigwassergehalt bestimmbar.

Zur Unterscheidung der unterschiedlichen Niederschlagsarten in der Atmosphäre wird der Verlauf der jeweiligen Differenzfrequenzspektren ausgewertet, also der Frequenzverschiebungen zwischen Sendefrequenz- und Empfangsfrequenzspektren. Dieses Auswertungsverfahren führt zu korrekten Ergebnissen, da die Differenzfrequenzspektren für die unterschiedlichen Niederschlagsarten charakteristische Formen annehmen, die unabhängig von der Laufzeit der elektromagnetischen Signale in der Atmosphäre sind.

Vorzugsweise wird der Verlauf des Differenzfrequenzspektrums unter Berücksichtigung wenigstens eines Parameters ausgewertet. Durch die Ermittlung

- eines Maximalwertes der Empfangsleistung,
- eines Wertes für die Differenzfrequenz (=Frequenzverschiebung zwischen Ausgangs- und Reflexionssignal) bei maximaler Intensität des Differenzfrequenzspektrums
- einer Breite des Differenzfrequenzspektrums,
- eines Quotienten, der aus dem Maximalwert und der Breite des Differenzfrequenzspektrums gebildet wird und/oder
- einer Differenzfrequenz zwischen einem Maximalwert und einem in der Mitte des Differenzspektrums liegenden Wert

wird ein oder werden mehrere Parameter berechnet, mit dem bzw. denen der Verlauf des Differenzfrequenzspektrums ausgewertet wird.

In einer weiteren besonderen Ausführungsform des erfindungsgemäßen Verfahrens wird der Parameter klassifiziert, um die Aussagekraft der einzelnen Parameter bei der Bestimmung der Niederschlagsart zu werten. Durch die Klassifizierung wird berücksichtigt, ob auf Grund eines für die Auswertung herangezogenen Parameters eindeutig auf eine bestimmte Niederschlagsart geschlossen werden kann, oder ob bzw. wie groß die Ungewißheit über das Vorherrschen einer bestimmten Niederschlagsart in einer Höhenstufe ist.

Vorzugsweise werden für einen Parameter je nach Erreichen eines bestimmten Schwellwertes, der eine bestimmte Niederschlagsart repräsentiert, bis zu 10 Punkte vergeben. Liegt der Parameter zwischen zwei Schwellwerten, so sind in der entsprechenden Höhenstufe unterschiedliche Niederschlagsarten zu erwarten. Je nach Anzahl n der zwischen zwei Schwellwerten zu erwartenden Niederschlagsarten werden 10 durch n Punkte an die jeweilige Niederschlagsart vergeben. Fallen also viele unterschiedliche Niederschlagsarten in die entsprechende Kategorie, ist die Wahrscheinlichkeit, dass nur eine einzige Niederschlagsart vorhanden ist, klein und es werden nur wenige Punkte vergeben. Erreicht der Parameter hingegen einen Schwellwert, der eindeutig auf das Vorhandensein einer einzigen Niederschlagsart schließen lässt, so werden viele Punkte vergeben. Auf diese Weise wird unter Berücksichtigung einer Wahrscheinlichkeitsbetrachtung die in der entsprechenden Höhenstufe vorherrschenden Niederschlagsart ermittelt

Vorzugsweise wird der wenigstens eine Parameter getrennt für die vier speziell ausgewählten Höhenstufen ermittelt und die Niederschlagsart als vorherrschend angegeben, für die nach dem vorbeschriebenen Verfahren die meisten Punkte ermittelt worden sind.

Neben der Ermittlung der Niederschlagsart in einer bestimmten Höhenstufe ist die Detektion, ob ein Niederschlagsereignis überhaupt stattfindet, von besonderer Bedeutung. Vorzugsweise wird die Entscheidung, ob Niederschlag fällt oder nicht durch Feststellen eines Signals im Differenzfrequenzspektrum getroffen. Insbesondere wird beim Auswerten von Eigenschaften der Reflexionssignale von einem Niederschlagsereignis ausgegangen, sobald wenigstens vier Werte des Differenzfrequenzspektrums einer Höhenstufe oberhalb eines höhenstufenspezifischen Schwellenwertes liegen. Vorzugsweise wird der höhenstufenspezifische Schwellenwert nach der Vorschrift:

"Mittelwerte des Rauschuntergrundes des Differenzfrequenzspektrums addiert mit dem 1,5-fachen Wert der Standardabweichung "

ermittelt.

Der Rauschuntergrund.wird durch folgende Vorschrift abgeschätzt:

1. Bestimme den Mittelwert $m_{i\ (0.\ Durchgang)}$ der spektralen Leistung
2. Entferne die Linie mit maximaler Leistung
3. Bestimme den Mittelwert $m_{i+1}$ (Rest der noch Vorhanden ist wird für Leistungsbestimmung verwendet) der spektralen Leistung,
4. Wenn $m_{i+1} < m_i$ ist gehe zu 2. Sonst ist $m_{i+1}$ der Rauschuntergrund.

Das vorgenannte Verfahren wird bevorzugt auf die vier speziell ausgewählten Höhenstufen angewendet. Wird hierbei bei den unteren beiden Höhenstufen kein Niederschlag festgestellt, so wird der Auswertung insgesamt kein Niederschlagsereignis zu Grunde gelegt.

Wird eine Niederschlagserscheinung detektiert, ist es weiterhin wichtig das eigentliche Signal vom Rauschen zu trennen. Hierzu wir der nach obiger Vorschrift abgeschätzte Rauschuntergrund vom Signal subtrahiert. Das auf diese Weise festgelegte Frequenzspekrum dient anschließend zur Bestimmung der Niederschlagsintensität und -art.

In einer weiteren, besonderen Ausführungsform des erfindungsgemäßen Verfahrens werden die mit dem Regenradar abgeleiteten Tropfenspektren zur Bestimmung der aktuellen Z/R-Beziehung verwendet, die für quantitative Niederschlagsmessungen mit Wetterradars benötigt wird. Die Schmelzzone wird aufgrund des ausgeprägten Fallgeschwindigkeitsgradienten detektiert.

Der Wert Z stellt hierbei den einzigen, mit herkömmlichen Wetterradars bestimmbaren Parameter dar und wird als sogenannter Radar-Reflektivitätsfaktor bezeichnet. Dieser Radar-Reflexionsfaktor berechnet sich wie folgt:

$$Z=\sum \text{(einzelne Tropfendurchmesser)}^6$$

Ferner stellt R die sogenannte Regenrate, im Allgemeinen in [mm/h], dar. Würde zu jeder Regenrate eindeutig eine Tropfengrößenverteilung gehören, so wären Z und R fest miteinander verknüpft. In der Realität kommen bei gleicher Regenrate jedoch unterschiedliche Tropfengrößenverteilungen vor. Wird mit Hilfe des erfindungsgemäßen Verfahrens die aktuelle Tropfengrößenverteilung in einem Streuvolumen bestimmt, so ist auf bevorzugte Weise für dieses Volumen und diesen Zeitpunkt auch die Verknüpfung zwischen Z und R ermittelbar.

Durch den Einsatz des erfindungsgemäßen Verfahrens sind auch großflächig angelegte Messungen, bei denen eine Vielzahl von Messorten ausgewählt werden, mit verhältnismäßig geringem Aufwand realisierbar. Insbesondere an Verkehrsknotenpunkten können durch Vorsehen entsprechender Messsysteme frühzeitig Informationen über Niederschlagsintensität und -art sowie entsprechende Sichtweiteninformationen gewonnen werden.

Erfindungsgemäß ist außerdem eine Vorrichtung zur Ermittlung von Niederschlagsarten in der Atmosphäre mit wenigstens einer Sendeeinheit zum Aussenden von Ausgangssignalen, zumindest einer Empfangseinheit zum Empfangen von Reflexionssignalen, die durch Streuung der Ausgangssignale an Niederschlagsteilchen in der Atmosphäre gebildet werden und die ein Reflexionsfrequenzspektrum aufweisen sowie mit einer Auswerteeinheit zum Auswerten von Eigenschaften der Reflexionssignale, die sich dadurch auszeichnet, dass die Sende- und die Empfangseinheit derart in einem kombinierten Sende-Empfangselement kombiniert sind, dass ein Strahlengang, den das Ausgangs- und das Eingangssignal zurücklegen nahezu identisch ist und dass mit der Auswerteeinheit Eigenschaften der Reflexionssignale unter Zugrundelegung eines Verlaufs eines aus Sendefrequenz- und Reflexionsfrequenzspektrum gebildeten Differenzfrequenzspektrums nach Höhenstufen aufgelöst auswertbar sind.

Auf Grund des speziellen Aufbaus der erfindungsgemäßen Vorrichtung ist sicher gestellt, dass der Streuwinkel im gesamten Streuvolumen einheitlich 180° beträgt. Die Strahlbreite ist auf einen Wert von etwa 1° begrenzt. Somit ist bei Verwendung der vorbeschriebenen Meßvorrichtung eine eindeutige Beziehung zwischen der Dopplerverschiebung und der Fallgeschwindigkeit der Niederschlagsteilchen herstellbar. Insbesondere ist es ausgeschlossen, dass sich der Streuwinkel beim Fallen der Niederschlagsteilchen durch das Streuvolumen ändert, wie es bspw. bei Systemen mit gekreuzten Strahlen im Nahbereich des Meßgeräts der Fall ist. Da vielmehr eine eindeutige Beziehung zwischen der Dopplerverschiebung und der Fallgeschwindigkeit der Niederschlagsteilchen besteht, ist das Dopplerspektrum eindeutig über die Tropfengrößenverteilung zu interpretieren.

In einer besonderen Ausführungsform der erfindungsgemäßen Vorrichtung weist das kombinierte Sende-Empfangselement einen Hornstrahler sowie zumindest einen Parabolspiegel auf. Der Hornstrahler erzeugt elektromagnetische Strahlung, die auf den Parabolspiegel gerichtet und durch diesen als Strahlbündel in die Atmosphäre ausgesendet wird.

Vorzugsweise ist weiterhin ein Modulationsgenerator, der mit einem Analog-Digital-Wandler synchronisiert wird, vorgesehen, mit dem eine Sendefrequenz des Ausgangssignals modulierbar ist. Der Modulationsgenerator erzeugt eine sägezahnförmige Spannung.

## Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:

Fig. 1 schematische Übersicht der Hauptkomponenten einer Vorrichtung zurErmittlung von Niederschlagsarten in der Atmosphäre

Fig. 2 schematisierte Detailansicht einer Sende- und Empfangseinheit

Fig. 3 Formanalyse der aufgenommenen Difeferenz frequenz spehtren

## Wege zur Ausführung der Erfindung, gewerbliche Verwendbarkeit

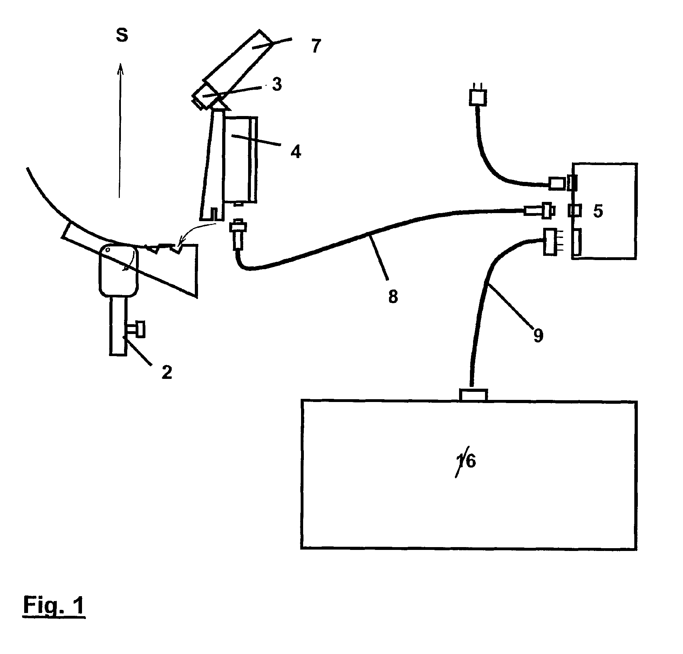

Figur 1 zeigt schematisch den Aufbau einer Vorrichtung zur Ermittlung von Niederschlagsarten in der Atmosphäre mit seinen Hauptkomponenten. Zu den Hauptkomponenten gehören hierbei ein Parabolspiegel 1, der an einer Halterung 2 befestigt ist, ein Strahlerzeugungselement 7, eine Signal-Sende- und Empfangseinheit 4, eine Spannungsversorgung 5 sowie eine Auswerteeinheit 6 .

Innerhalb des Strahlerzeugungselements 7, das sowohl elektromagnetische Strahlung mit einer Frequenz von 24 GHz aussendet als auch die in der Atmosphäre gestreute Strahlung empfängt, ist ein Hornstrahler 3 vorgesehen. Bei diesem Hom- oder auch Trichterstrahler 3 handelt es sich um eine Parabolantenne, die über einen trichterförmigen Hohlleiter verfügt. Die Strahlachse des Hornstrahlers 3 ist auf den Brennpunkt des Parabolspiegels 1 gerichtet. Von dort wird das Strahlenbündel in Richtung der Strahlachse "S" in die Atmosphäre gesendet. Die Strahlbreite des Strahlenbündels wird auf 1° eingestellt. Ferner beträgt der Streuwinkel im gesamten überwachten Volumen 180°, so dass sowohl das ausgesandte als auch das reflektierte Strahlenbündel exakt den gleichen Strahlenweg, allerdings in umgekehrter Richtung zurücklegen.

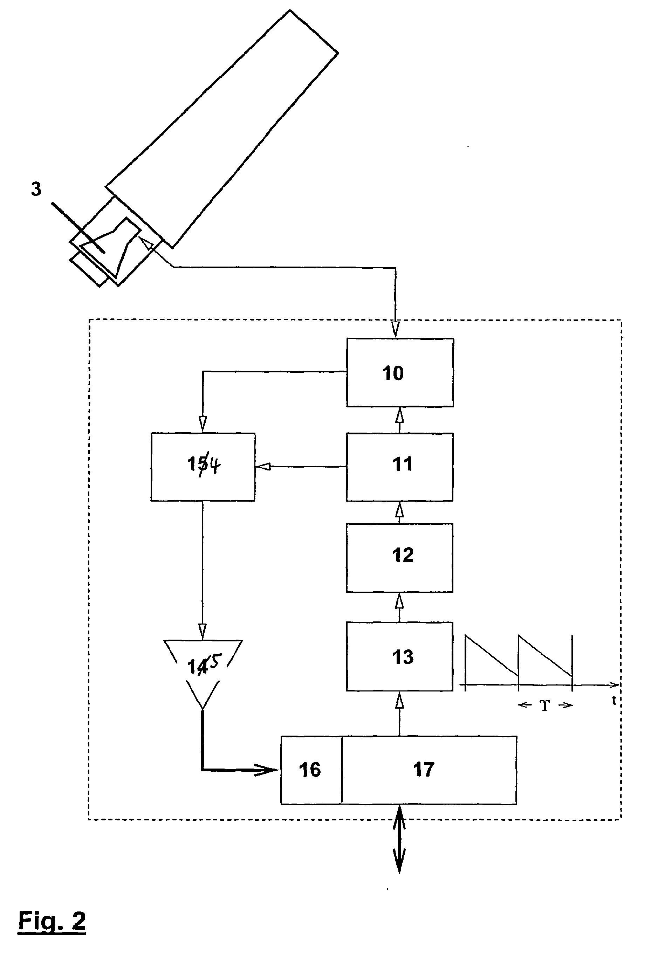

Das Strahlerzeugungselement 7 erhält das für die Erzeugung der Strahlung erforderliche Steuersignal aus der Signal-Sende - und Empfangseinheit 4, deren Aufbau im Weiteren in der Beschreibung der Figur 2 näher erläutert wird. Über ein kombiniertes Steuerdaten- und Energieversorgungskabel 8 ist die Signal-Sende - und Empfangseinheit 4 mit der Spannungsversorgung 5 verbunden. Die Spannungsversorgung 5 ist wiederum über ein Datenkabel 9 mit der Auswerteeinheit 6 verbunden. Bei der Auswerteeinheit 6 handelt es sich um einen mikroprozessor-gesteuerten Rechner, der die detektierten und aufbereiteten Signale aus der Atmosphäre auswertet und so unter Zugrundelegung von höhenstufenspezifischen Dopplerspektren eine Niederschlagsklassifizierung vornimmt. Die Frequenz des Ausgangssignals wird sägezahnförmig moduliert, so dass auch ein durch eine Streuung in der Atmosphäre hervorgerufenes Reflexionssignal sägezahnförmig moduliert ist. Die Frequenz des mit einer Sendeeinheit detektierten Reflexionssignals ist jedoch gegenüber der des Sendesignals wegen der Laufzeitverschiebung proportional zur Höhe des Messvolumens verschoben. Aus dieser Differenzfrequenz zwischen Ausgangs- und Reflexionssignal wird die Messhöhe abgeleitet.

In der Auswerteeinheit 6 werden schließlich die Formen der Dopplerspektren, die durch die Aufbereitung eines empfangenen Signals in der Signal-Sende- und Empfangseinheit 4 gebildet werden, ausgewertet. Auf Grund dieser Formanalyse der Spektren und ihrer charakteristischen Höhenabhängigkeit werden die in den unterschiedlichen Höhenstufen auftretenden Niederschlagsarten ermittelt. Das Verfahren zur Auswertung der Spektren wird im Folgenden noch ausführlich beschrieben.

In Figur 2 sind die einzelnen Komponenten der Signal-Sende- und Empfangseinheit 4 dargestellt. Die Signal-Sende- und Empfangseinheit 4 weist einen Zirkulator 10, einen Signalkoppler 11, einen spannungsgesteuerten Oszillator 12, einen Modulationsgenerator 13, einen Empfangsmischer 14, einen Verstärker 15, einen Analog-Digital-Wandler 16 sowie einen Digital-Signal-Prozessor 17 auf.

Der Modulationsgenerator 13 erzeugt eine sägezahnförmig modulierte Spannung, deren Modulationshub durch den Digital-Signal-Prozessor 17 eingestellt wird. Der Modulationshub wird hierbei in Abhängigkeit der gewünschten Höhenauflösung der Meßdaten gewählt. Mit der periodischen, sägezahnförmig modulierten Spannung wird der spannungsgesteuerte Oszillator 12, der das eigentliche Sendesignal mit einer Frequenz von 24,1 $\pm$ 0,01 GHz erzeugt, frequenzmoduliert. Die Synchronisation des auf diese Weise erzeugten Sendesignals erfolgt mit Hilfe des Analog-Digital-Wandlers 16. Anschließend wird der Hauptteil des Sendesignals über den Zirkulator 10, der als Sende-Empfangsweiche dient, auf den Hornstrahler 3 geleitet. Ein kleiner Teil des Sendesignals wird durch den Signalkoppler 11 ausgekoppelt und zum Empfangsmischer 14 geleitet.

Im Empfangsmischer 14 wird das Produkt aus dem empfangenen Reflexionssignal, das vom Zirkulator 10 kommt und dem im Signalkoppler 11 ausgekoppelten Sendesignal gebildet. Der durch die Multiplikation der beiden Signale entstehende Signalanteil mit der Differenzfrequenz zwischen dem Sende-und dem Empfangssignal wird zum Verstärker 15 geführt. Bei dem Verstärker 15 handelt es sich um einen rauscharmen Vorverstärker, der die Differenzfrequenzen zwischen dem Sende- und dem Empfangssignal verstärkt, wobei das Frequenzband 0 - 65 kHz umfasst. Das verstärkte Signal wird schließlich über den Analog-Digital-Wandler 16 in den Digital-Signal-Prozessor 17 geleitet. Hier wird das digitalisierte Signal mit Hilfe einer zweidimensionalen Fourieranalyse analysiert und so höhenaufgelöste Dopplerspektren ermittelt.

Diese höhenaufgelösten Spektren werden an die Auswerteeinheit 6 übertragen, die mittels einer zweiten Fourieranalyse (FA2) die höhenstufenspezifischen Spektrallinien in 64 unterschiedliche, fallgeschwindigkeitsspezifische Spektrallinien aufteilt. Jede dieser Spektrallinien repräsentiert eine Fallgeschwindigkeit. Die fallgeschwindigkeitsspezifischen Spektrallinien 1 bis 64 entsprechen Fallgeschwindigkeiten der Niederschlagsteilchen von 0,19 bis etwa 12 m/s. Die Fallgeschwindigkeit gibt letztendlich Aufschluß darüber, welche Niederschlagsteilchen in einer bestimmten Höhenstufe auftreten.

Zur Ermittlung der in einer Höhenstufe vorherrschenden Niederschlagsart, wird eine Formanalyse der wie vorbeschrieben ermittelten Spektrallinien durchgeführt. Für diese in der Auswerteeinheit 6 durchgeführte Formanalyse werden 58 Spektrallinien verwendet.

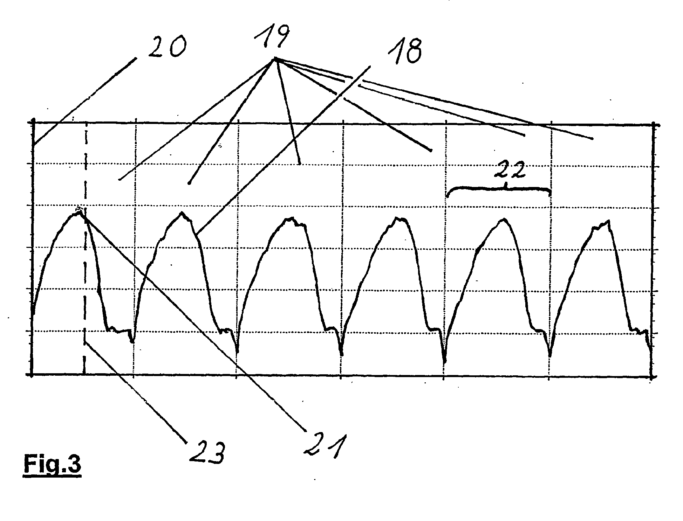

Mit Hilfe der Fig. 3 soll beispielhaft die Formanalyse der aufgenommenen Differenzfrequenzspektren näher erläutert werden. Fig. 3 zeigt Differenzfrequenzspektren, bzw. Dopplerspektren für Regen, die mit dem erfindungsgemäßen Verfahren aufgenommen worden sind.

In dem Diagramm sind nebeneinander sechs Dopplerspektren 18 für sechs Höhenstufen 19, die eine vertikale Ausdehnung von 35 m aufweisen und in einem Höhenbereich von 70 bis 245 m liegen, dargestellt. Die höhenstufenspezifischen Dopplerspektren 18 werden wiederum jeweils in 64 unterschiedliche Frequenzen zerlegt, wobei jeder Frequenz eine Fallgeschwindigkeit der Niederschlagsteilchen von 0 bis 12 m/s zugeordnet wird. Auf Grund der Fallgeschwindigkeit kann schließlich auf die Tropfengröße in der jeweiligen Höhenstufe 19 geschlossen werden.

Zusätzlich wird die Form der höhenstufenspezifischen Dopplerspektren 18 untersucht. Aus der charakteristischen Form der Dopplerspektren 18 wird auf die jeweils in einer Höhenstufe 19 vorkommende Niederschlagsart geschlossen. Somit lässt sich aus der jeweiligen Frequenzverschiebung die Fallgeschwindigkeit der Niederschlagsteilchen und aus der Form des Dopplerspektrums die Niederschlagsart in einer bestimmten Höhenstufe ermitteln.

Um die unterschiedlichen Niederschlagsarten sicher von einander unterscheiden zu können, werden bei der Formanalyse der Spektrallinien insgesamt fünf Parameter zur Klassifizierung herangezogen. So werden sowohl die Stärke des Signals 20, die ermittelte Fallgeschwindigkeit bei maximaler Intensität des Signals, die Breite des Spektrums 22, die Differenz zwischen der Mitte des Spektrums 23 und dem Maximum des Spektrums 21, als auch der Quotient aus Maximum des Spektrums 21 und der Breite des Spektrums 22 für jede Spektrallinie 18 untersucht.

Für jeden dieser Parameter werden verschiedene Schwellenwerte festgelegt, die eine bestimmte Niederschlagsart bzw. Niederschlagszusammensetzung repräsentieren. Der Abstand eines Parameterwerts von einem Schwellenwert gibt an, wie groß die Wahrscheinlichkeit ist, dass eine bestimmte Niederschlagsart bzw. Niederschlagszusammensetzung in einer Höhenstufe zu erwarten ist.

Ist auf Grund des erreichten Parameterwerts bspw. nur eine einzige Niederschlagsart zu erwarten so werden an diese Niederschlagsart 10 Punkte vergeben. Könnten dagegen n verschiedene Niederschlagsarten auftreten, so werden an jede dieser Niederschlagsarten nur 10/n Punkte vergeben. Abschließend wird für alle fünf Parameter abgefragt, welche Niederschlagsart jeweils die meisten Punkte erhalten hat und so eine Bestimmung der in den einzelnen Höhenstufen auftretenden Niederschlagsart vorgenommen.

**Bezugzeichenliste**

1 Parabolspiegel

2 Halterung

3 Hornstrahler

4 Signal-Sende- und Empfangseinheit

5 Spannungsversorgung

6 Auswerteeinheit

7 Strahlungserzeugungselement

8    Kombiniertes Stromversorgungs- und Steuerdatenkabel

9    Datenkabel

10    Zirkulator

11    Signalkoppler

12    Spannungsgesteuerter Oszillator

13    Modulationsgenerator

14    Empfangsmischer

15    Verstärker

16    Analog-Digital-Wandler

17    Digital-Signal-Prozessor

18    höhenstufenspezifisches Dopplerspektrum

19    Höhenstufe

20    Stärke des Signals

21    Maximum des Spektrums

22    Breite des Spektrums

23    Mitte des Spektrums

**Patentansprüche**

1.   Verfahren zur Ermittlung von Niederschlagsarten in der Atmosphäre, mit den Schritten

- Aussenden von Ausgangssignalen, insbesondere Radarsignalen, die ein Sendefrequenzspektrum aufweisen,
- Detektieren von Reflexionssignalen, die durch Streuung der Ausgangssignale an in wenigstens zwei Höhenstufen befindlichen Niederschlagsteilchen gebildet werden und die ein Reflexionsfrequenzspektrum aufweisen sowie
- Auswerten von Eigenschaften der Reflexionssignale,

wobei beim Auswerten von Eigenschaften der Reflexionssignale ein Verlauf eines aus Sendefrequenz- und Reflexionsfrequenzspektrum gebildeten Differenzfrequenzspektums nach Höhenstufen aufgelöst und unter Berücksichtigung eines Maximalwertes der Empfangsleistung, eines Wertes für eine Differenzfrequenz bei maximaler Intensität des Differenzfrequenzspektrums sowie einer Breite des Differenzfrequenzspektrums ausgewertet wird, **dadurch gekennzeichnet, dass** bei der Auswertung des Verlauf des Differenzfrequenzspektrums

- ein Quotient, der aus dem Maximum des Differenzfrequenzspektrums und der Breite des Differenzfrequenzspektrums gebildet wird und/oder
- eine Differenz zwischen einem Maximum des Differenzfrequenzspektrums und der Differenzfrequenz in der Mitte des Differenzfrequenzspektrums ermittelt wird.

2.   Verfahren nach Anspruch 1,
**dadurch gekennzeichnet, dass** die Ausgangs- und die Reflexionssignale von einer kombinierten Sende- und Empfangseinheit gesendet bzw. empfangen werden.

**3.** Verfahren nach Anspruch 1 oder 2,
**dadurch gekennzeichnet, dass** für die Höhenstufen eine vertikale Ausdehnung von 35 m gewählt wird.

**4.** Verfahren nach einem der Ansprüche 1 bis 3,
**dadurch gekennzeichnet, dass** die Ausgangs- und die Reflexionssignale in bzw. aus 28 Höhenstufen gesendet bzw. empfangen werden.

**5.** Verfahren nach einem der Ansprüche 1 bis 4,
**dadurch gekennzeichnet, dass** als Messzeitintervall eine Zeitspanne von 10 s gewählt wird.

**6.** Verfahren nach einem der Ansprüche 1 bis 5,
**dadurch gekennzeichnet, dass** für das Auswerten der Reflexionssignale vier Höhenstufen verwendet werden.

**7.** Verfahren nach einem der Ansprüche 1 bis 6,
**dadurch gekennzeichnet, dass** für das Auswerten der Reflexionssignale die Höhenstufen 70 bis 105 m, 105 bis 140 m, 210 bis 245 m und 420 bis 455 m verwendet werden.

**8.** Verfahren nach einem der Ansprüche 1 bis 7,
**dadurch gekennzeichnet, dass** beim Auswerten von Eigenschaften der Reflexionssignale von einem Niederschlagsereignis ausgegangen wird, sobald wenigstens vier Werte des Differenzfrequenzspektrums einer Höhenstufe oberhalb eines höhenstufenspezifischen Schwellenwertes liegen.

**9.** Verfahren nach Anspruch 8,
**dadurch gekennzeichnet, dass** der höhenstufenspezifische Schwellenwert nach der Vorschrift "Mittelwert des Differenzfrequenzspektrums addiert mit dem 1,5-fachen Wert der Standardabweichung" ermittelt wird.

**10.** Verfahren nach einem der Ansprüche 1 bis 9,
**dadurch gekennzeichnet, dass** zur Bestimmung eines Rauschniveaus ein Maximalwert des Differenzfrequenzspektrums bestimmt, eliminiert und anschließend der Mittelwert des um den eliminierten Maximalwert verkleinerten Differenzfrequenzspektrums ermittelt wird.

**11.** Verfahren nach Anspruch 10,
**dadurch gekennzeichnet, dass** zur Bestimmung des Rauschniveaus ein Minimalwert der Varianz ermittelt wird.

**12.** Verfahren nach einem der Ansprüche 1 bis 11,
**dadurch gekennzeichnet, dass** 70 m als kleinste Messhöhe gewählt wird.

**13.** Verfahren nach einem der Ansprüche 1 bis 12,
**dadurch gekennzeichnet, dass** das eine Sendefrequenz des Ausgangssignals sägezahnartig moduliert wird.

**14.** Verfahren nach einem der Ansprüche 1 bis 13,
**dadurch gekennzeichnet, dass** das Ausgangssignal mit konstanter Sendeleistung gesendet wird.

**15.** Vorrichtung zur Ermittlung von Niederschlagsarten in der Atmosphäre mit wenigstens einer Sendeeinheit zum Aussenden von Ausgangssignalen, zumindest einer Empfangseinheit zum Empfangen von Reflexionssignalen, die durch Streuung der Ausgangssignale an Niederschlagsteilchen in der Atmosphäre gebildet werden und die ein Reflexionsfrequenzspektrum aufweisen sowie mit einer Auswerteeinheit zum Auswerten von Eigenschaften der Reflexionssignale, wobei die Sende- und die Empfangseinheit derart in einem kombinierten Sende-Empfangselement kombiniert sind, dass ein Strahlengang, den das Ausgangs- und das Eingangssignal zurücklegen nahezu identisch ist und dass mit der Auswerteeinheit Eigenschaften der Reflexionssignale unter Zugrundelegung eines Verlaufs eines aus Sendefrequenz- und Reflexionsfrequenzspektrum gebildeten Differenzfrequenzspektums nach Höhenstufen aufgelöst auswertbar sind, wobei die Auswerteeinheit derart ausgeführt ist, dass bei der nach Höhenstufen aufgelösten Auswertung des Differenzfrequenzspektrums ein Maximalwert der Empfangsleistung, ein Wert für eine Differenzfrequenz bei maximaler Intensität des Differenzfrequenzspektrums sowie eine Breite des Differenzfrequenzspektrums berücksichtigt wird,
**dadurch gekennzeichnet, dass** bei der Auswertung des Verlauf des Differenzfrequenzspektrums mit der Auswerteeinheit zusätzlich

- ein Quotient, der aus dem Maximum des Differenzfrequenzspektrums und der Breite des Differenzfrequenzspektrums gebildet wird und/oder
- eine Differenz zwischen einem Maximum des Differenzfrequenzspektrums und der Differenzfrequenz in der Mitte des Differenzfrequenzspektrums ermittelt wird.

**16.** Vorrichtung nach Anspruch 15,
**dadurch gekennzeichnet, dass** das kombinierte Sende-Empfangselement einen Hornstrahler sowie zumindest einen Parabolspiegel aufweist.

**17.** Vorrichtung nach Anspruch 15 oder 16,
**dadurch gekennzeichnet, dass** ein Modulationsgenerator vorgesehen ist, mit dem eine Sendefrequenz des Ausgangssignals modulierbar ist.

**Claims**

**1.** A method for determining types of precipitation in the atmosphere, comprising the steps of

- emitting output signals, in particular radar signals, having a transmission frequency spectrum,
- detecting reflection signals formed by scattering of said output signals at precipitation particles located at at least two altitude levels and having a reflection frequency spectrum, as well as
- evaluating characteristics of said reflection signals,
wherein upon evaluating characteristics of said reflection signals, a course of a difference frequency spectrum formed from transmission frequency and reflection frequency spectrum is resolved by altitude levels and evaluated considering a maximum value of reception quality, a value for a difference frequency at maximum intensity of said difference frequency spectrum as well as a width of said difference frequency spectrum,
**characterized in that** upon evaluation of said course of said difference frequency spectrum
- a quotient formed from said maximum of said difference frequency spectrum and said width of said difference frequency spectrum and/or
- a difference between a maximum of said difference frequency spectrum and said difference frequency in the centre of said difference frequency spectrum is determined.

**2.** The method according to claim 1,
**characterized in that** said output and reflection signals are transmitted or received, respectively, by a combined transmitting and receiving unit.

**3.** The method according to claims 1 or 2,
**characterized in that** for said altitude levels, a vertical extension of 35 m is chosen.

**4.** The method according to any of claims 1 to 3,
**characterized in that** said output and reflection signals are transmitted or received, respectively, in or from, respectively, 28 altitude levels.

**5.** The method according to any of claims 1 to 4,
**characterized in that** a time span of 10 s is chosen as the measuring time interval.

**6.** The method according to any of claims 1 to 5,
**characterized in that** for said evaluation of said reflection signals, four altitude levels are used.

**7.** The method according to any of claims 1 to 6,
**characterised in that** for said evaluation of said reflection signals, the altitude levels 70 to 105 m, 105 to 140 m, 210 to 245 m, and 420 to 455 m are used.

**8.** The method according to any of claims 1 to 7,
**characterized in that** upon evaluating characteristics of said reflection signals, a precipitation event is assumed as soon as at least four values of said difference frequency spectrum of one altitude level lie above an altitude level-specific threshold value.

**9.** The method according to claim 8,
**characterized in that** said altitude level-specific threshold value is determined according to the rule "average value of the difference frequency spectrum added to the 1.5-fold value of the standard deviation".

**10.** The method according to any of claims 1 to 9,
**characterized in that** for determining a noise level, a maximum value of said difference frequency spectrum is determined, eliminated, and subsequently said average value of said difference frequency spectrum reduced by said eliminated maximum value is determined.

**11.** The method according to claim 10,
**characterized in that** for determining said noise level, a minimum value of variance is determined.

**12.** The method according to any of claims 1 to 11,
**characterized in that** 70 m is chosen as the lowest measuring height.

**13.** The method according to any of claims 1 to 12,
**characterized in that** a transmission frequency of said output signal is modulated in a sawtooth-like manner.

**14.** The method according to any of claims 1 to 13,
**characterized in that** said output signal is transmitted with a constant transmission power.

**15.** An apparatus for determining types of precipitation in the atmosphere with at least one transmitting unit for emitting output signals, at least one receiving unit for receiving reflection signals formed by scattering of said output signals at precipitation particles in the atmosphere and having a reflection frequency spectrum, as well as with an evaluation unit for evaluating characteristics of said reflection signals, wherein said transmitting and receiving units are combined in one combined transmitting/receiving element, such that a beam path covered by said output and input signals is almost identical and that with said evaluation unit, characteristics of said reflection signals can be evaluated based on a course of a difference frequency spectrum formed from transmission frequency and reflection frequency spectrum resolved by altitude levels, wherein said evaluation unit is designed such that for evaluation of said difference frequency spectrum resolved by altitude levels, a maximum value of said reception quality, a value for a difference frequency at maximum intensity of said difference frequency spectrum as well as a width of said difference frequency spectrum are considered,
**characterized in that** upon evaluating said course of said difference frequency spectrum with said evaluation unit

- a quotient formed from said maximum of said difference frequency spectrum and said width of said difference frequency spectrum and/or
- a difference between a maximum of said difference frequency spectrum and said difference frequency in the centre of said difference frequency spectrum is additionally determined.

**16.** The apparatus according to claim 15,
**characterized in that** said combined transmiting/receiving element has a horn antenna as well as at least one parabolic reflector.

**17.** The apparatus according to claims 15 or 16,
**characterized in that** a modulation generator is provided, using which a transmission frequency of said output signal can be modulated.

**Revendications**

**1.** Procédé destiné à déterminer les types de précipitations dans l'atmosphère, comportant les étapes

- d'émission de signaux de sortie, notamment de signaux radar, présentant un spectre de fréquence d'émission,
- de détection de signaux de réflexion qui sont formés par la dispersion desdits signaux de sortie sur des particules de précipitation situées à au moins deux niveaux altitudinaux et qui présentent un spectre de fréquence de réflexion ainsi que
- d'évaluation des caractéristiques desdits signaux de réflexion,
lors de ladite évaluation des caractéristiques desdits signaux de réflexion, une tracé de spectre de fréquence différentielle composé dudit spectre de fréquence d'émission et dudit spectre de fréquences de réflexion étant décomposé selon les niveaux altitudinaux et analysé en tenant compte d'une valeur maximale de la puissance de réception, d'une valeur d'une fréquence différentielle pour une intensité maximale dudit spectre de fréquence différentielle ainsi que d'une largeur dudit spectre de fréquence différentielle,
caractérisé en ceci que, lors de ladite évaluation dudit tracé dudit spectre de fréquence différentielle,
- un quotient formé par ledit maximum dudit spectre de fréquence différentielle et ladite largeur dudit spectre de fréquence différentielle et/ou
- une différence entre un maximum dudit spectre de fréquence différentielle et la fréquence différentielle au milieu dudit spectre de fréquence différentielle est déterminé/e.

2.  Procédé selon la revendication 1,
caractérisé en ceci que lesdits signaux de sortie et de réflexion sont émis ou bien reçus par une unité émettrice/réceptrice combinée.

3.  Procédé selon la revendication 1 ou 2,
caractérisé en ceci que, pour lesdits niveaux altitudinaux, une étendue verticale de 35 m est choisie.

4.  Procédé selon l'une des revendications 1 à 3,
caractérisé en ceci que lesdits signaux de sortie et de réflexion sont émis ou bien reçus à ou bien à partir de 28 niveaux altitudinaux.

5.  Procédé selon l'une des revendications 1 à 4,
caractérisé en ceci que comme intervalle de mesure une durée de 10 s est choisie.

6.  Procédé selon l'une des revendications 1 à 5,
caractérisé en ceci que, pour ladite évaluation desdits signaux de réflexion, quatre niveaux altitudinaux sont utilisés.

7.  Procédé selon l'une des revendications 1 à 6,
caractérisé en ceci que, pour ladite évaluation desdits signaux de réflexion, les niveaux altitudinaux 70 à 105 m, 105 à 140 m, 210 à 245 m et 420 à 455 m sont utilisés.

8.  Procédé selon l'une des revendications 1 à 7,
caractérisé en ceci que, lors de ladite évaluation des caractéristiques desdits signaux de réflexion, un évènement de précipitation est présumé dès lors qu'au moins quatre valeurs dudit spectre de fréquence différentielle d'un même niveau altitudinal sont supérieures à un seuil spécifique au niveau altitudinal.

9.  Procédé selon la revendication 8,
caractérisé en ceci que ledit seuil spécifique au niveau altitudinal est déterminé selon la règle « valeur moyenne du spectre de fréquence différentielle additionnée avec une fois et demie de la valeur de la déviation normale ».

10. Procédé selon l'une des revendications 1 à 9,
caractérisé en ceci que, pour la détermination du niveau de bruit, une valeur maximale dudit spectre de fréquence différentielle est déterminée et éliminée et ensuite la valeur moyenne dudit spectre de fréquence différentielle diminué de ladite valeur maximale éliminée est déterminée.

11. Procédé selon la revendication 10,
caractérisé en ceci que, pour ladite détermination dudit niveau de bruit, une valeur minimale de la variance est déterminée.

12. Procédé selon l'une des revendications 1 à 11,
caractérisé en ceci qu'un niveau de 70 m est choisi comme altitude de mesure la plus basse.

13. Procédé selon l'une des revendications 1 à 12,
caractérisé en ceci qu'une fréquence émise dudit signal de sortie est modulée en dents de scie.

14. Procédé selon l'une des revendications 1 à 13,
caractérisé en ceci que ledit signal de sortie est émis avec une puissance d'émission constante.

**15.** Dispositif destiné à déterminer les types des précipitations dans l'atmosphère, composé d'au moins une unité émettrice destinée à émettre des signaux de sortie, d'au moins une unité réceptrice destinée à recevoir les signaux de réflexion qui sont formés par la dissipation desdits signaux de sortie sur les particules de précipitation dans l'atmosphère et qui présentent un spectre de fréquence de réflexion, ainsi que d'une unité de dépouillement destinée à évaluer les caractéristiques desdits signaux de réflexion, ladite unité émettrice et ladite unité réceptrice étant combinées dans un élément émetteur/récepteur combiné de manière à ce qu'un trajet de rayons parcouru par le signal de sortie et le signal d'entrée soit presque identique et que ladite unité de dépouillement permette d'évaluer les caractéristiques des signaux de réflexion sur la base d'un tracé d'un spectre de fréquence différentielle formé dudit spectre de fréquence d'émission et dudit spectre de fréquences de réflexion, décomposé selon des niveaux altitudinaux, et que, lors de ladite évaluation dudit spectre de fréquence différentielle décomposé selon des niveau altitudinaux, une valeur maximale de la puissance de réception, une valeur d'une fréquence différentielle à une intensité maximale dudit spectre de fréquence différentielle ainsi qu'une largeur dudit spectre de fréquence différentielle soient prises en compte,
caractérisé en ceci que, lors de ladite évaluation dudit tracé dudit spectre de fréquence différentielle au moyen de ladite unité de dépouillement, de plus,

- un quotient formé par ledit maximum dudit spectre de fréquence différentielle et la largeur dudit spectre de fréquence différentielle et/ou
- une différence entre un maximum dudit spectre de fréquence différentielle et la fréquence différentielle au milieu dudit spectre de fréquence différentielle est déterminé/e.

**16.** Dispositif selon la revendication 15,
caractérisé en ceci que ledit élément émetteur/récepteur combiné présente une antenne à cornet ainsi qu'au moins un miroir parabolique.

**17.** Dispositif selon l'une des revendications 15 ou 16,
caractérisé en ceci qu'un générateur de modulation est prévu qui permet de moduler une fréquence d'émission dudit signal de sortie.

**Fig. 1**

**Fig. 2**

**Fig.3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3590723 C2

**In der Beschreibung aufgeführte Nicht-Patentliteratur**

- **F. PRODI.** Time Variability in Rainfall Events Observed by Pludix. *2nd European Conference on Radar Meteorology,* 18. November 2002